# EUROPÄISCHE PATENTANMELDUNG

(11) **EP 1 083 426 A2**
(43) Veröffentlichungstag der Anmeldung: **14.03.2001**
(21) Anmeldenummer: 00117584.3
(22) Anmeldetag: 16.08.2000
(51) Int. Cl.: G01N 27/407

(54) **Gehäuse für einen Sensor**

(30) Priorität: 07.09.1999 DE 19942740
(71) Anmelder: Heraeus Electro-Nite International N.V., 3530 Houthalen (BE)
(72) Erfinder: Baerts, Christiaan, 3580 Beringen (BE); Vrancken, Patrick, 3740 Bilzen (BE); Jaenen, Jean-Paul, 3600 Genk (BE); Neven, Lucas, 3700 Tongeren (BE); Poelmans, Marc, 3520 Zonhoven (BE)
(74) Vertreter: Kühn, Hans-Christian

(57) **Zusammenfassung**

Die Erfindung betrifft ein Gehäuse für einen Sensor, insbesondere zur Messung in Abgasen von Verbrennungsmotoren, mit einer Durchtrittsöffnungen und eine Längsachse aufweisenden, im wesentlichen zylindrischen Schutzkappe, wobei die Verbindungslinien der Mittelpunkte der in Umfangsrichtung benachbarten Durchtrittsöffnungen auf der abgewickelten Mantelfläche der Schutzkappe im Winkel von 45° zur Längsachse der Schutzkappe angeordnet sind. Es ergibt sich das Problem, eine Lösung bereit zu stellen, die den Stand der Technik verbessert und dem Stand der Technik anhaftende Mängel vermeidet. Das Problem wird dadurch gelöst, daß die Durchtrittsöffnungen kreisförmig ausgebildet sind und daß der Strömungsweg zwischen dem äußeren der Schutzkappe und dem inneren der Schutzkappe nur durch die Durchtrittsöffnungen begrenzt ist.

## Beschreibung

Die Erfindung betrifft ein Gehäuse für einen Sensor, insbesondere zur Messung in Abgasen von Verbrennungsmotoren, mit einer Durchtrittsöffnungen und eine Längsachse aufweisenden, im wesentlichen zylindrischen Schutzkappe, wobei die Verbindungslinien der Mittelpunkte der in Umfangsrichtung benachbarten Durchtrittsöffnungen auf der abgewickelten Mantelfläche der Schutzkappe im Winkel von 45° zur Längsachse der Schutzkappe angeordnet sind.

Die US 4,466,880 beschreibt einen Sauerstoffsensor mit einem Sensorelement, das von einer zylindrischen, porösen Filterkappe geschützt wird. Der Sauerstoffsensor ist zur Abgaskontrolle in Kraftfahrzeugen geeignet. Da schnelle Wechsel der Abgasgeschwindigkeit und der Abgastemperatur zu einem Bruch des Sensorelementes führen können, dient die Filterkappe, die aus gepreßter, gesinterter Metallwolle hergestellt ist, zum Schutz das Sensorelementes vor mechanischer Beanspruchung durch Druckwechsel sowie vor Thermoschock. Die Dicke und die Porosität der gesinterten Metallwolle ist je nach gewünschtem Gasdurchtritt zum Sensorelement einstellbar. Die poröse Struktur der Filterkappe ermöglicht einen allseitigen Abgaszutritt zum Sensorelement und damit ein gutes Ansprechverhalten in allen Einbaulagen. Zur Erhöhung der mechanischen Festigkeit wird die Filterkappe aus gesinterter Metallwolle mit einer oder mehreren Metallhüllen, die Löcher für den Abgasdurchtritt aufweisen, versehen.

Es ergibt sich das Problem, eine Lösung bereit zu stellen, die den Stand der Technik verbessert und dem Stand der Technik anhaftende Mängel vermeidet.

Das Problem wird dadurch gelöst, daß die Durchtrittsöffnungen kreisförmig ausgebildet sind und daß der Strömungsweg zwischen dem Äußeren der Schutzkappe und dem Inneren der Schutzkappe nur durch die Durchtrittsöffnungen begrenzt ist.

Unter einer benachbarten Durchtrittsöffnung ist eine solche zu verstehen, die sich auf der Mantelfläche der Schutzkappe im geringsten Abstand vom Mittelpunkt der betrachteten Durchtrittsöffnung befindet, wobei die benachbarten Durchtrittsöffnungen vorzugsweise etwa gleiche Durchmesser aufweisen. Somit kann eine kreisförmige Durchtrittsöffnung mit dem Lochdurchmesser D_{L} beispielsweise drei bis sechs benachbarte kreisförmige Durchtrittsöffnungen mit dem gleichen Lochdurchmesser D_{L} aufweisen.

Die kreisförmige Ausgestaltung der Durchtrittsöffnungen ermöglicht eine optimale Anordnung mit einer möglichst dichten Packung der Durchtrittsöffnungen auf der im wesentlichen zylindrischen Mantelfläche der Schutzkappe, bei der das Verhältnis der Lochfläche A_{L}, die aus der Summe der Lochflächen der einzelnen Durchtrittsöffnungen gebildet wird, zu der Fläche A_{M} der verbleibenden Mantelfläche groß ist. Das Verhältnis A_{L} / A_{M} ist ein Maß für die Durchlässigkeit der Schutzkappe.

Die Kreisform der Öffnungen ergibt einen Strömungsverlauf ohne Verwirbelungen, wie sie an rechteckigen Durchtrittsöffnungen auftreten. Eine so gestaltete Schutzkappe kann sowohl für Gassensoren als auch für Temperatursensoren verwendet werden. Sie weist eine geringe thermische Masse auf und gewährleistet eine gute Umströmung des Sensorelements. Das hat sowohl für Gassensoren als auch für Temperatursensoren eine hohe Ansprechgeschwindigkeit des Sensors zur Folge.

Die gleichmäßige Verteilung der Durchtrittsöffnungen auf der im wesentlichen zylindrischen Mantelfläche der Schutzkappe ermöglicht einen Einbau des Sensors in allen Raumlagen. Vorzugsweise wird das Verhältnis A_{L} / A_{M} im Bereich von 0,075 bis 0,67 gewählt. Besonders hat sich aber ein Verhältnis A_{L} / A_{M} im Bereich von 0,28 bis 0,38 bewährt.

Die Schutzkappe kann in einer bevorzugten Ausführungsform an ihrer einen Stirnseite geschlossen sein. Die geschlossene Stirnseite kann eine zentrische Öffnung aufweisen, die vorzugsweise einen Öffnungsquerschnitt von mindestens 0,75 mm² aufweist. Der Außendurchmesser D_{A} der Schutzkappe wird vorzugsweise im Bereich von 5 mm bis 10 mm gewählt. Besonders bewährt hat sich ein Außendurchmesser D_{A} der Schutzkappe von etwa 7 mm. Zudem hat es sich bewährt, wenn die Schutzkappe mit einem solchen Außendurchmesser D_{A} eine Anzahl von 20 bis 24 Durchtrittsöffnungen aufweist. Ein Lochdurchmesser D_{L} der Durchtrittsöffnungen von etwa 1 mm bis 3 mm, vorzugsweise von etwa 2 mm bis 2,2 mm, hat sich dabei bewährt. Es ist zudem möglich, daß die Durchtrittsöffnungen auf einer Schutzkappe zwei oder mehr unterschiedliche Lochdurchmesser D_{L} aufweisen. So kann die Packungsdichte an Durchtrittsöffnungen noch weiter erhöht werden.

Jedoch sind der Außendurchmesser D_{A} der Schutzkappe, die Durchmesser der Durchtrittsöffnungen, die Anzahl der Durchtrittsöffnungen und der Abstand zwischen benachbarten Durchtrittsöffnungen je nach Sensorgeometrie und Material generell variabel, solange eine ausreichende Versorgung des Sensorelementes mit dem strömenden Abgas gewährleistet ist und die mechanische Stabilität der Schutzkappe erhalten bleibt.

Die Herstellung der Durchtrittsöffnungen der Schutzkappe erfolgt vorzugsweise durch Laserschneiden oder Stanzen, aber auch Bohren ist in einfacher und unkomplizierter Weise möglich. Als Material für die Schutzkappe kann je nach Temperatur-Einsatzgebiet des Sensors beispielsweise ein temperaturfester Stahl, ein keramisches Material oder ein Kunststoff verwendet werden.

Die Erfindung wird anhand von drei Figuren beispielhaft näher erläutert.
Fig. 1 und 2: Temperatursensor mit einer erfindungsgemäßen Schutzkappe
Fig. 3: Verhältnis A_{L} / A_{M} als Funktion des Lochdurchmessers D_{L} für das Sensordesign aus Fig. 1 und 2

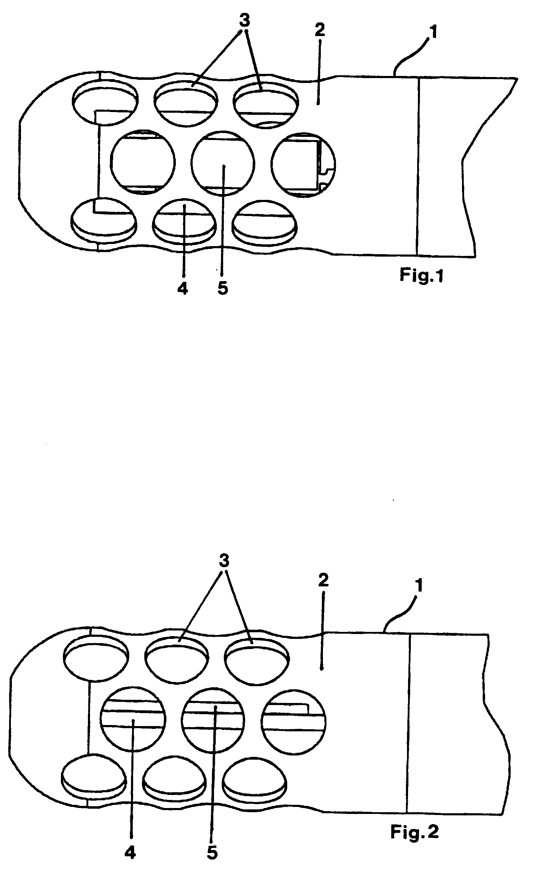

Fig. 1 zeigt einen Temperatursensor 1 mit einer im wesentlichen zylindrischen Schutzkappe 2, die kreisförmige Durchtrittsöffnungen 3 aufweist. Innerhalb der Schutzkappe 1 befindet sich ein ohne Kontakt zur Schutzkappe angeordneter planarer Temperaturfühler mit einem Sensorträger 4 und einem Sensorelement 5.

Fig. 2 zeigt den Temperatursensor 1 aus Fig. 1 um 90° gedreht.

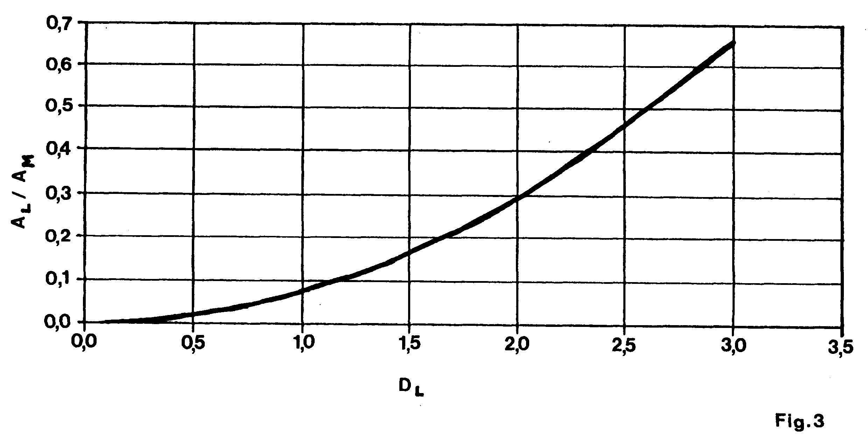

Fig. 3 zeigt das Verhältnis der Lochfläche der Durchtrittsöffnungen A_{L} zu der verbleibenden Mantelfläche A_{M} als Funktion des Lochdurchmessers D_{L} der Durchtrittsöffnungen für das Sensordesign aus Fig. 1 und Fig. 2.

## Patentansprüche

1. Gehäuse für einen Sensor, insbesondere zur Messung in Abgasen von Verbrennungsmotoren, mit einer Durchtrittsöffnungen und eine Längsachse aufweisenden, im wesentlichen zylindrischen Schutzkappe, wobei die Verbindungslinien der Mittelpunkte der in Umfangsrichtung benachbarten Durchtrittsöffnungen auf der abgewickelten Mantelfläche der Schutzkappe im Winkel von 45° zur Längsachse der Schutzkappe angeordnet sind, dadurch gekennzeichnet, daß die Durchtrittsöffnungen (3) kreisförmig ausgebildet sind und daß der Strömungsweg zwischen dem Äußeren der Schutzkappe (2) und dem Inneren der Schutzkappe (2) nur durch die Durchtrittsöffnungen (3) begrenzt ist.

2. Gehäuse nach Anspruch 1, dadurch gekennzeichnet, daß ein Verhältnis von Lochfläche A_{L} zu verbleibender Mantelfläche A_{M} der Schutzkappe (2) Werte im Bereich von 0,075 bis 0,67 aufweist.

3. Gehäuse nach Anspruch 2, dadurch gekennzeichnet, daß das Verhältnis von Lochfläche A_{L} zu verbleibender Mantelfläche A_{M} der Schutzkappe (2) Werte im Bereich von 0,28 bis 0,38 aufweist

4. Gehäuse nach einem der Ansprüche 1 bis 3, dadurch gekennzeichnet, daß die Schutzkappe (2) an ihrer einen Stirnseite geschlossen ist.

5. Gehäuse nach Anspruch 4, dadurch gekennzeichnet, daß die geschlossene Stirnseite eine zentrische Öffnung aufweist mit einem Öffnungsquerschnitt von vorzugsweise mindestens 0,75 mm².

6. Gehäuse nach einem der Ansprüche 1 bis 5, dadurch gekennzeichnet, daß die Schutzkappe (2) einen Außendurchmesser D_{A} im Bereich von etwa 5 mm bis 10 mm aufweist.

7. Gehäuse nach Anspruch 6, dadurch gekennzeichnet, daß die Schutzkappe (2) einen Außendurchmesser D_{A} von etwa 7 mm aufweist

8. Gehäuse nach einem der Ansprüche 6 bis 7, dadurch gekennzeichnet, daß die Schutzkappe (2) eine Anzahl von 20 bis 24 Durchtrittsöffnungen (3) aufweist.

9. Gehäuse nach einem der Ansprüche 6 bis 8, dadurch gekennzeichnet, daß die Schutzkappe (2) Durchtrittsöffnungen (3) mit einem Lochdurchmesser D_{L} im Bereich von etwa 1 mm bis 3 mm aufweist.

10. Gehäuse nach Anspruch 9, dadurch gekennzeichnet, daß der Lochdurchmesser D_{L} im Bereich von etwa 2 mm bis 2,2 mm liegt.

11. Gehäuse nach einem der Ansprüche 1 bis 10, dadurch gekennzeichnet, daß die Durchtrittsöffnungen (3) durch Stanzen oder Laserschneiden hergestellt sind.
